Europäisches Patentamt

European Patent Office

Office européen des brevets

(11) Publication number: **0 083 481**
**B1**

(12) **EUROPEAN PATENT SPECIFICATION**

(45) Date of publication of patent specification: **10.12.86**

(51) Int. Cl.⁴: **F 16 B 21/16**

(21) Application number: **82306624.6**

(22) Date of filing: **13.12.82**

(54) A fixing device.

(30) Priority: **19.12.81 GB 8138343**

(43) Date of publication of application:
**13.07.83 Bulletin 83/28**

(45) Publication of the grant of the patent:
**10.12.86 Bulletin 86/50**

(84) Designated Contracting States:
**AT DE FR GB IT**

(56) References cited:
**DE-B-1 110 958**
**DE-C-1 197 288**
**GB-A-1 357 702**
**GB-A-1 392 182**
**US-A-4 012 154**
**US-A-4 136 989**

(73) Proprietor: **Hammond Engineering Limited**
**38 Chase Side**
**Enfield Middlesex EN2 6NG (GB)**

(72) Inventor: **Fisher, Dudley John**
**3/4 Stud Gate Cottages Burnt Farm Ride**
**Enfield Middlesex (GB)**

(74) Representative: **Saunders, Harry**
**SAUNDERS & DOLLEYMORE European Patent**
**Attorneys 2 Norfolk Road**
**Rickmansworth Hertfordshire WD3 1JH (GB)**

Courier Press, Leamington Spa, England.

## Description

The invention relates to a device for fixing a structural part to a rod-shaped element by pressing the structural part against an abutment, wherein the device comprises a substantially ring-shaped unit engageable into a peripheral circular groove on the element and fixing means for forming the unit and the structural part away from each other, whereby the portion of the unit which is inside the groove is pressed against a lateral surface of the groove.

A number of devices for such an attachment are known, each of these devices having some disadvantages, known to persons skilled in the art, which make it unsuitable for some applications. One such device is disclosed in DE—B—1 110 958 which shows a circlip provided with threaded holes for the insertion of grup screws for pressing the circlip against an abutment. This has the advantage that circlip pliers must be used to insert the circlip into and remove it from the groove in which it is, in use, situated. As a consequence such a circlip cannot be used in constricted surroundings and a special tool is needed for its insertion and removal.

Another such device is disclosed in US—A—4 136 989 which shows an expandable annular cam-type locking device comprising a pair of segments which are pivotally interconnected at one of their ends and lockably interconnected at their other ends. This device is extremely complex and therefore very expensive.

The aim of the invention is to provided a device which has some advantages compared with known attachment devices.

According to the invention the above mentioned unit is a split collar which is composed of two or more separate parts which are not interconnected.

A device according to the invention has various advantages, including the following:

(a) A hexagon key, screwdriver or a small spanner can be used for attachment of a structural part by means of the device instead of e.g. a special big spanner needed for tightening a large nut at the end of a shaft. (b) Corrosion problems are largely eliminated because the device enables the designer to choose suitable clearances for the structural parts to be fixed.

(c) When the screws are slackened, the split collar falls away.

The invention will now be described, by way of example, with reference to the accompanying diagrammatic drawings, in which:

Figure 1 is an axial section showing a fan attached to a shaft by a first embodiment of a device according to the invention,

Figure 2 is a fragmentary plan to Figure 1, and

Figure 3 shows a detail of a second embodiment.

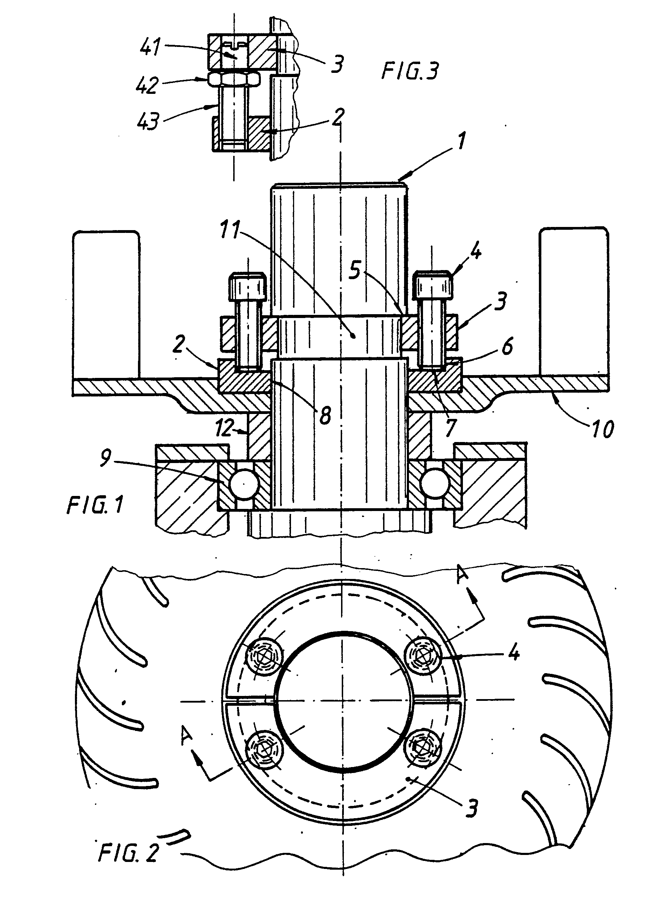

Figure 1 shows a shaft 1 having an end of reduced diameter defining a shoulder and axially spaced therefrom a circular peripheral groove 11. The end carries a rolling bearing 9 in contact with the shoulder, a spacer sleeve 12 in contact with the bearing 9 and a fan 10 in contact with the spacer sleeve 12.

The fan 10 has a circular base carrying at the periphery of one side thereof a plurality of equally spaced vanes. The central part of the circular base is thickened and provided with a central hole by which it is slid on to the shaft end and the side carrying the vanes is provided with a circular recess coaxial with the hole.

The device has a thrust collar 2 which is provided with a central hole 8 by which it is slid on to the shaft end and has on the face remote from the fan base a circular recess which is coaxial with the hole 8 and defines a circular peripheral wall. The non-recessed face of the thrust collar 2 is received in the recess of the fan base.

Figures 1 and 2 further show a split collar 3 composed of two separate halves which are not interconnected each having two threaded holes therethrough, each hole receiving a screw 4. In the illustrated embodiment each of the threaded holes in each of the halves is spaced about 30° from the respective end of that collar half. In the shown working positions the split collar 3 is inserted in the groove 11 and the screws 4 are screwed so far as to enter the recess in the thrust collar 2 and press, when tightened, the split collar 3 against the lateral surface 5 of the groove 11 remote from the thrust collar 2. The radial distances of the threaded holes in the split collar 3 from the axis of the collar 3, and the radial distance of the peripheral wall from the axis of the thrust collar 2 are such that the bolts 4 engage the inner surface 6 of the said peripheral wall with a small interference.

Assembly is accomplished by first putting on to the shaft the components to be fitted, i.e. the bearing 9, the spacer sleeve 12 and the fan 10, followed by the thrust collar 2 received in the recess of the fan 10 and facing with its recessed side out. The two halves of the split collar 3 are then fitted separately to enter the groove 11 and the screws 4 are tightened to bear against the bottom of the recess in the thrust collar 2.

The split collar 3 is prevented from falling out since the screws 4 push at 7 against the bottom of the recess in the thrust collar 2 and engage the inner surface 6 of the peripheral wall of the thrust collar 2. As the screws 4 are further tightened the split collar 3 is pushed hard against said lateral surface 5 of the groove 11, so that no further pressure or centrifugal force can displace it. Simultaneously the fan 10 is pressed on to the spacer sleeve 12 supported, via the bearing 9 on the shoulder of the shaft 1 and thereby firmly held on the shaft end.

It will be appreciated that many modifications could be made within the scope of the appended claims. So for instance the circular base of the fan 10 could be without a circular recess for the thrust collar 2, or the thrust collar 2 could be entirely dispensed with and the screws 4 can contact the circular base of the fan 10 directly, which base may or need not be provided with a circular or annular groove or other recesses or depressions for the screws 4. Also the spacer sleeve 12 can be dispensed with and the circular base of the fan 10 made to incorporate a portion having a function similar to that of the spacer sleeve 12. Even the bearing 9 could be dispensed with and the shaft could have a bearing situated elsewhere. The collar 3 could also be formed by more part-annular parts than two.

Instead of making threaded holes in the split collar 3, threaded holes may be made in the thrust collar 2 (Figure 3), which then is not recessed, or, if the thrust collar 2 is dispensed with, the threaded holes may be made directly in the circular base of the fan 10 which then is not recessed. In that case smooth holes are made in the split collar 3 and instead of the screws 4 fixing elements are used which have a smooth portion 41, which may have on top a screwdriver slot or a recess for an Allen wrench, a collar 42, which may be either circular or hexagonal, and a threaded portion 43 screwed into the threaded hole in the collar 2 or the circular base of the fan 10. By unscrewing the threaded element from the threaded hole the collar 42 engages the adjacent face of the split collar 3, and the split collar 3 and the structural part 10 are forced away from each other whereby the portion of the collar 3 which is inside the groove 11 is pressed against the lateral surface 5 of the groove 11. Instead of the collar 42 the threaded element may have a shoulder serving the same purpose.

The term "split collar" as used herein is intended to mean a collar composed of two or more separate parts which are not interconnected.

## Claims

1. A device for fixing a structural part (10) to a rod-shaped element (1) by presing the structural part against an abutment, wherein the device comprises a substantially ring-shaped unit (3) engageable into a peripheral circular groove (11) on the element (1), and fixing means (4) for forcing the unit and the structural part (10) away from each other, whereby the portion of the unit (3) which is inside the groove (11) is pressed against a lateral surface (5) of the groove (11) characterized in that the unit (3) is a split collar (3) which is composed of two or more separate parts which are not interconnected.

2. A device according to Claim 1, characterized in that the fixing means are threaded elements (4) engageable in threaded holes.

3. A device according to Claim 2, characterized in that the threaded holes are in the collar (3), and the threaded elements are screws (4) which pass through the threaded holes and which, on being screwed through the holes, press directly or indirectly on to the structural part (10) being attached to the element (1) thereby forcing the collar (3) away from the structural part (10).

4. A device according to Claim 3, characterized in that, in operation, the screws (4) press on to the structural part (10) via thrust means (2) positioned between the structural part (10) and the split collar (3).

5. A device according to Claim 3 or 4, characterized in that the structural part (10) or the thrust means (2) define a peripheral circular wall the inner surface (6) of which is engaged by the screws (4).

6. A device according to Claim 2, characterized in that the threaded holes are in the structural part (10) or in a thrust means (2) positioned between the structural part (10) and the collar (3).

7. A device according to any one of the preceding claims wherein the split collar (3) is formed by two or more part-annular elements.

## Patentansprüche

1. Vorrichtung zum Befestigen eines Bauelementes in ein stabförmiges Element durch Drücken des Bauelementes gegen einen Anschlag, mit einer im wesentlichen ringförmigen Einheit, die in eine kreisförmige Umfangsnut (11) an dem Element (1) einsetzbar ist, und mit einem Befestigungsmittel zum Auseinanderdrängen der Einheit und des Bauelements (10), wodurch der Bereich der Einheit (3), der innerhalb der Nut (11) ist, gegen eine Seitenfläche (5) der Nut (11) gedrückt ist, dadurch gekennzeichnet, daß die Einheit ein geteilter Bundring (3) ist, der aus zwei oder mehr separaten Teilen, die nicht miteinander verbunden sind, zusammengesetzt ist.

2. Vorrichtung nach Anspruch 1, dadurch gekennzeichnet daß das Befestigungsmittel durch Gewindeelemente (4) gebildet ist, die in Gewindebohrungen eingreifen.

3. Vorrichtung nach Anspruch 2, dadurch gekennzeichnet, daß die Gewindebohrung in dem Bundring (3) sind und daß die Gewindeelemente Schrauben (4) sind, die durch die Gewindebohrungen dringen und die beim Hindurchschrauben durch die Bohrungen unmittelbar oder mittelbar auf das Bauelement (10), das mit dem Element (1) zu verbinden ist, drücken, wodurch der Bundring (3) vom Bauelement (10) weggedrängt ist.

4. Vorrichtung nach Anspruch 3, dadurch gekennzeichnet, daß im Betrieb die Schrauben (4) auf das Bauelement (10) über ein Schubmittel (2) drücken, das zwischen den Bauelementen (10) und dem geteilten Bundring (3) angeordnet ist.

5. Vorrichtung nach Anspruch 3 oder 4, dadurch gekennzeichnet, daß das Bauelement (10) oder das Schubmittel (2) eine kreisförmige Umfangswand definieren, deren Innenfläche (6) mit den Schrauben (4) in Kontakt ist.

6. Vorrichtung nach 2, dadurch gekennzeichnet, daß die Gewindebohrungen in dem Bauteil (10) oder in dem Schubmittel (2), das zwischen dem Bauelement (10) und dem Bundring (3) angeordnet ist, sind.

7. Vorrichtung nach einem vorhergehenden Ansprüche, dadurch gekennzeichnet, daß der geteilte Bundring (3) aus zwei oder mehr teilringförmigen Elementen gebildet ist.

## Revendications

1. Dispositif de fixation d'une pièce structurelle à un élément à configuration de tige par pression de la pièce structurelle contre une butée, dans lequel le dispositif comprend une unité substantiellement annulaire pouvant être engagé dans une gorge périphérique circulaire (11) de l'élément (1), est des moyens de fixation (4) pour forcer l'unité et la pièce structurelle (10) à s'éloigner l'une de l'autre, de sorte que la zone de l'unité (3) qui est à l'intérieur de la gorge (11) est pressée contre une surface latérale (5) de cette gorge (11), caractérisé en ce que l'unité est un collier fendu (3) composé de deux ou plusieurs parties distinctes qui ne sont pas interconnectées.

2. Dispositif selon la revendication 1 caractérisé en ce que les moyens de fixation sont des éléments filetés (4) pouvant être engagés dans des trous taraudés.

3. Dispositif selon la revendication 2 caractérisé en ce que les trous taraudés se trouvent dans le collier (3) et les éléments filetés sont des vis (4) qui passent à travers les trous taraudés et qui, quand on les vissent dans ces trous, pressent directement ou indirectement la pièce structurelle (10) attachée à l'élément (1) forçant ainsi le collier (3) à s'éloigner de cette pièce structurelle (10).

4. Dispositif selon la revendication 3 caractérisé en ce que, pendant l'utilisation, les vis (4) pressent la pièce structurelle (10) par l'intermédiaire d'un moyen de butée (2) disposé entre la pièce structurelle (10) et le collier fendu (3).

5. Dispositif selon la revendication 3 ou 4, caractérisé en ce que la pièce structurelle (10) ou le moyen de butée (2) définissent une paroi circulaire périphérique dont la surface intérieure (6) s'engage avec les vis (4).

6. Dispositif selon la revendication 2 caractérisé en ce que les trous taraudés sont dans la pièce structurelle (10) ou dans un moyen de butée (2) disposé entre la pièce structurelle (10) et le collier (3).

7. Dispositif selon l'une quelconque des revendications précédentes dans lequel le collier fendu (3) est constitué par deux ou plusieurs éléments partiellement annulaires.

FIG.3

FIG.1

FIG.2